# EUROPÄISCHE PATENTSCHRIFT

(11) **EP 3 644 280 B1**
(45) Veröffentlichungstag und Bekanntmachung des Hinweises auf die Patenterteilung: **09.12.2026**
(21) Anmeldenummer: 19204537.5
(22) Anmeldetag: 22.10.2019
(51) Int. Cl.: G06T 7/73, G06T 7/80

(54) **VERFAHREN ZUR AUSRICHTUNG EINER KAMERA NACH IHREN EXTRINSISCHEN PARAMETERN**
METHOD FOR ALIGNING A CAMERA ACCORDING TO EXTRINSIC PARAMETERS
PROCÉDÉ D'ORIENTATION D'UNE CAMÉRA EN FONCTION DE SES PARAMÈTRES EXTRINSÈQUES

(30) Priorität: 22.10.2018 DE 102018126212
(43) Veröffentlichungstag der Anmeldung: 29.04.2020
(73) Patentinhaber: EYYES GmbH, 3494 Gedersdorf (AT)
(72) Erfinder: Traxler, Johannes, 3500 Imbach (AT); Breiter, Michael, 52134 Herzogenrath (DE)
(74) Vertreter: Torggler & Hofmann Patentanwälte Kooperation mit Dirk Harms

(56) Entgegenhaltungen:
- EP-A1- 2 881 710
- DE-A1- 102011 079 886
- JP-A- 2012 242 261
- JP-A- 2017 211 200
- COLLADO J M ET AL: "Self-calibration of an On-Board Stereo-vision System for Driver Assistance Systems", 2006 IEEE INTELLIGENT VEHICLES SYMPOSIUM : MEGURO-KU, JAPAN, 13 - 15 JUNE 2006, IEEE, PISCATAWAY, NJ, USA, 13 June 2006 (2006-06-13), pages 156 - 162, XP010937006, ISBN: 978-4-901122-86-3, DOI: 10.1109/IVS.2006.1689621

## Beschreibung

Die hier offenbarte Erfindung betrifft ein Verfahren zur Ermittlung der Ausrichtung einer Kamera hinsichtlich der extrinsischen Parameter der Kamera, welche Kamera in eine Kamerafortbewegungsrichtung gegebenenfalls parallel zu einer Bewegungsebene bewegt wird, wobei das mittels der Kamera aufgenommene Bild eine horizontale Bildachse und/oder eine vertikale Bildachse sowie Bildpunkte umfasst, aus welchem Bild eine Bildpunkt-Objektkante eines aufgenommenen Bildpunkt-Objektes extrahierbar ist.

Nach dem Stand der Technik umfasst eine Kamera einen Bildsensor zur Aufnahme der Umgebung.

Eine Objektkante kann im Rahmen der Offenbarung der Erfindung eine geometrische Kante sein, durch welche geometrische Kante das Objekt oder ein Objektteilbereich begrenzt ist. Weiters kann die Objektkante auch durch einen Farbübergang und/oder durch einen Helligkeitsübergang definiert sein. Die Definition einer Objektkante ist nach der gängigen Lehre bekannt.

Eine Bildpunkt-Objektkante sei eine im Bild enthaltenen Objektkante, welche durch Bildpunkte gebildet wird. Eine Bildpunkt-Objektkante ist aus der Vielzahl von Bildpunkten unter Anwendung der angeführten Definition einer Objektkante im Bild ermittelbar. Es sind die die Objektkante im Bild ausbildenden Bildpunkte aus der Vielzahl der Bildpunkte extrahierbar. Im Allgemeinen ist unter einem Bildpunkt-Objekt eine Projektion eines Objektes auf eine Bildsensorebene des Bildsensors der Kamera zu verstehen. Es ist unter einer Bildpunkt-Objektkante eine Projektion der Objektkante auf die Bildsensorebene des Bildsensors der Kamera zu verstehen.

Beispielsweise bedingt das autonome Fahren von Automobilen, dass die Ausrichtung der die Umgebung des Automobils aufnehmenden Kamera hinreichend genau bekannt ist und/oder die Kamera hinsichtlich ihrer extrinsischen Parameter relativ zur Bewegungsebene hinreichend genau eingestellt wird. Eine Einstellung der Kamera kann in Bezug auf die hinreichend genaue Ausrichtung der Kamera erfolgen.

US2018023909 offenbart ein Verfahren, welches Verfahren zu dem nachstehend beschriebenen erfindungsgemäßen Verfahren ähnlich ist. US2018023909 basiert jedoch darauf, dass die Abmessungen der aufgenommenen Objekte bekannt sind, was jedoch unter realen Bedingungen wegen der Vielzahl an Objekten nicht möglich ist. Ebenso wäre eine Annahme, dass ein Objekt mit bekannten Abmessungen gegebenenfalls in regelmäßigen Zeitabständen aufgenommen wird, realitätsfremd.

Im Unterschied zu US2018023909 basiert das erfindungsgemäße Verfahren nicht auf dem

Wissen über die Größe der aufgenommenen Objekte. Die Größe der aufgenommenen Objekte ist kein Eingangswert des erfindungsgemäßen Verfahrens. Die Patentdokumente JP2017211200A und JP2012242261A offenbaren jeweils Verfahren zur Ermittlung einer Kamerausrichtung aus Bilddaten einer Fahrzeugumgebung.

Nach dem Stand der Technik sind keine Verfahren bekannt, welche Verfahren eine hinreichend genaue Ermittlung der Kameraausrichtung hinsichtlich ihrer extrinsischen Parameter unter Verwendung eines Bilddaten umfassenden Bildes erlauben. Der Begriff hinreichend genau ist im Rahmen der Offenbarung der Erfindung so zu verstehen, dass die Genauigkeit der Ermittlung der extrinsischen Parameter nicht vom Verfahren selbst, sondern indirekt von der Qualität der Bildaufnahme wie beispielsweise Bildauflösung oder Schärfe des Bildes und/oder der verwendeten Datenbanken abhängt. Das im Folgenden offenbarte Verfahren zeichnet sich dadurch aus, dass keine Annahmen bei der Durchführung getroffen werden, welche Annahmen eine Ungenauigkeit des Verfahrens bedingen.

Das erfindungsgemäße Verfahren basiert im Allgemeinen auf einem Vergleich der Geometrie von Objektkanten im Bild (im Folgenden Bildpunkt-Objektkanten) und bekannten realen geometrischen Eigenschaften dieser Objektkanten. Im Rahmen der Offenbarung der Erfindung wird die notwendige Unterscheidung, ob ein Eingangswert wie beispielsweise eine Objektkante als ein aus dem Bild generierter Eingangswert oder aufgrund der realen Situation in das erfindungsgemäße Verfahren eingeht, dadurch erreicht, dass der Begriff Bildpunkt beziehungsweise der Begriff real dem jeweiligen Eingangswert wie eben dem Begriff der Objektkante vorangestellt wird.

Der Anspruch 1 und der Anspruch 2 definieren erfindungsgemäße Lösungen.

Erfindungsgemäß wird die oben gestellte Aufgabe dadurch gelöst, dass
aus dem Bild eine Bildpunkt-Objektkante eines aufgenommenen Bildpunkt-Objektes extrahiert wird, wobei
aus der Vielzahl der Bildpunkt-Objektkanten eine Bildpunkt-Objektkante des Bildpunkt-Objektes ausgewählt wird,
welche Objektkante die reale Objekteigenschaft einer sich horizontal erstreckenden Kante aufweist,
welche reale Objekteigenschaft dieser Objektkante in einer Datenbank abgespeichert ist,
wobei ein Abweichungsmaß eines Kameraneigungswinkel durch die Bestimmung eines ersten Winkels, welcher erste Winkel sich zwischen der Bildpunkt-Objektkante und der horizontalen Bildachse erstreckt, bestimmt wird.

Erfindungsgemäß wird die oben gestellte Aufgabe auch dadurch gelöst, dass
aus dem Bild eine Bildpunkt-Objektkante eines aufgenommenen Bildpunkt-Objektes extrahiert wird, wobei
aus der Vielzahl der Bildpunkt-Objektkanten eine Bildpunkt-Objektkante des Bildpunkt-Objektes ausgewählt wird,
welche Objektkante die reale Objekteigenschaft einer sich vertikal erstreckenden Kante aufweist, welche reale Objekteigenschaft dieser Objektkante in einer Datenbank abgespeichert ist, wobei ein Abweichungsmaß eines Kameraneigungswinkel durch die Bestimmung eines zweiten Winkels zwischen der Bildpunkt-Objektkante und der vertikalen Bildachse bestimmt wird.

Eine Kamera weist nach dem Stand der Technik eine Kameraachse auf. Die Kameraneigung ist als ein Winkel beschreibend die Abweichung der Kameraachse von einer realen horizontalen oder vertikalen Achse angebbar.

Die Kameraachse ist auch unter Verweis auf die gängige Definition die "Blickrichtung" der Kamera.

Das Bild ist eine zweidimensionale Abbildung der realen Umgebung in einer Ebene auf der Ebene des Bildsensors. Die Bildachsen definieren die zweidimensionale Abbildung sowie diese Ebene, wobei eine horizontale Bildachse und eine vertikale Bildachse nach der gängigen Lehre definiert sind. Die horizontale Bildachse und vertikale Bildachse schneiden die Kameraachse. Bei einer korrekt eingestellten Kamera ist die horizontale Bildachse horizontal und die vertikale Bildachse vertikal orientiert.

Nach der gängigen Lehre können aus einem ein Objekt aufweisenden Bild Bildpunkt-Objekteigenschaften des Bildpunkt-Objektes extrahiert werden, sodass das Bildpunkt-Objekt auf Basis dieser Bildpunkt-Eigenschaften und unter Vergleich der Bildpunkt-Objekteigenschaften mit realen Objekteigenschaften klassifiziert werden kann. Das erfindungsgemäße Verfahren weist dem klassifizierten Bildpunkt-Objekt gewisse reale Eigenschaften zu, wobei angenommen wird, dass das Bildpunkt-Objekt diese realen Eigenschaften aufweist.

Nachdem die Objektklassifizierung des Bildpunkt-Objektes über Bildpunkt-Objekteigenschaften erfolgt, ist anzunehmen, dass das Bildpunkt-Objekt in einem gewissen Rahmen die realen Objekteigenschaften tatsächlich aufweist, da ansonsten eine Objektklassifizierung des Bildpunkt-Objektes nicht möglich wäre.

Der gängigen Lehre der darstellenden Geometrie und der Theorie des Lochkameramodells folgend wird eine reale vertikale, sohin parallel zu der vertikalen Bildachse orientierte und in einem rechten Winkel zu der Kameraachse orientierte Objektkante auch im verzerrten, perspektivischem Bild als eine vertikale Bildpunkt-Objektkante dargestellt. Gleichermaßen der gängigen Lehre der darstellenden Geometrie und der Theorie des Lochkameramodells folgend wird eine reale horizontale, sohin zu der horizontale Bildachse orientierte und in einem rechten Winkel zu der Kameraachse sowie parallel Objektkante im verzerrten Bild als eine horizontale Bildpunkt-Objektkante dargestellt. Eine schräg stehende und sohin nicht vertikal oder horizontal ausgerichtete Objektkante umfasst eine horizontale Komponente und eine vertikale Komponente, auf welche Komponenten obige Merkmale anzuwenden sind.

Falls das Lochkameramodell nicht anwendbar ist, so ist das Bild nach der gängigen Lehre zu entzerren.

Die Ermittlung der Kameraneigung kann sohin dadurch ermittelt werden, dass im Bild der erste Winkel und/oder der zweite Winkel bestimmt wird. Mit anderen Worten soll die Kamera und/oder das Bild so gerichtet sein, dass eine sich real horizontal oder real vertikal erstreckende Objektkante auch im Bild als eine sich horizontal oder vertikal erstreckende Objektkante dargestellt ist oder eine Verzerrung der erwähnten Objektkanten ausschließlich durch die optischen Eigenschaften der Kamera, insbesondere der Linse bedingt ist.

Falls die erwähnten realen Objektkanten nicht im Bild als horizontale oder vertikale Objektkanten dargestellt sind, kann der erste Winkel und/oder der zweite Winkel als ein Abweichungsmaß ermittelt werden.

Es kann die Ausrichtung der Kamera auf Basis des ermittelten Abweichungsmaß eingestellt werden. Weiters kann die oben angeführte Verzerrung des Bildes aufgrund der optischen Eigenschaften der Kamera unter Anwendung von Verfahren nach dem Stand der Technik entzerrt werden.

In Ergänzung oder alternativ zu obigen kann das der Erfindung zu Grunde liegende Problem dadurch gelöst werden, dass
ein Bildpunkt-Objekt nach realen Objekteigenschaften klassifiziert wird und aus der Vielzahl der Bildpunkt-Objekte die Bewegungsebene ausgewählt wird und eine Bildpunkt-Bewegungsebenenkante der Bewegungsebene detektiert wird,
wobei die Bildpunkt-Position der Bildpunkt-Bewegungsebenenkante mit einer Soll-Bildpunkt-Position verglichen wird und ein Versatzmaß ermittelt wird.

Eine Bewegungsebenenkante ist Teil der Bewegungsebene. Die Bewegungsebenenkante kann die Bewegungsebene begrenzen. Die Bewegungsebene kann auch eine in der Bewegungsebene verlaufende Linie sein.

Bei einem abweichenden Kamerapunkt verlaufen der gängigen Lehre der darstellenden Geometrie folgend die Bildpunkt-Objektkanten zu einem abweichenden Bildpunkt-Fluchtpunkt. Dem folgend ist die Position der Objektkanten im Bildpunkt abweichend.

Die Ermittlung des Versatzmaßes ist auch aus einer mathematischen Teilbetrachtung eine homographische Transformation zwischen den Soll-Bildpunkt-Winkeln und den Ist-Bildpunkt-Winkeln ermittelbar.

Das erfindungsgemäße Verfahren kann unter der die Komplexität des Verfahrens reduzierenden Annahme durchgeführt werden, dass die reale Objekteigenschaft die Erstreckung der realen Objektkante parallel zu einer Bezugsebene umfasst.

Die Objektkante kann sich sohin real horizontal oder vertikal erstrecken. Die Objektkante kann sich weiters dadurch auszeichnen, dass die Objektkante im rechten Winkel zu der Kamerabewegungsrichtung orientiert ist.

Der gängigen Lehre der darstellenden Geometrie und der Theorie des Lochkameramodells folgend wird eine reale vertikale und in einem rechten Winkel zu der Kameraachse sowie parallel zu der vertikalen Bildachse orientierte Objektkante auch im verzerrten, perspektivischem Bild als eine vertikale Bildpunkt-Objektkante dargestellt. Gleichermaßen der gängigen Lehre der darstellenden Geometrie und der Theorie des Lochkameramodells folgend wird eine reale horizontale und in einem rechten Winkel zu der Kameraachse sowie parallel zu der horizontale Bildachse orientierte Objektkante im verzerrten Bild als eine horizontale Bildpunkt-Objektkante dargestellt.

Eine schräg stehende und sohin nicht vertikal oder horizontal ausgerichtete Objektkante umfasst eine horizontale Komponente und eine vertikale Komponente, auf welche Komponenten obige Merkmale anzuwenden sind. Dies ist auch allgemein auf Geraden anwendbar.

Der erwähnte, nach der gängigen Lehre der darstellenden Geometrie definierte Begriff der Blickrichtung ist in Bezug auf das hier diskutierte Verfahren als äquivalent zu dem Begriff der Kameraachse anzusehen.

Die Kameraachse kann so nach vorne oder nach hinten gerichtet sein, dass die Kamerafortbewegungsrichtung und die Kameraachse zueinander parallel sind. Es solche Ausrichtung der Kamera kann die Komplexität der Durchführung und/oder des Rechenaufwandes des erfindungsgemäßen Verfahrens reduzieren.

Das hier diskutierte Verfahren macht sich die oben beschriebene Darstellung von real horizontalen und vertikalen Geraden als horizontale beziehungsweise vertikale Geraden insofern zu Nutze, als dass diese real horizontalen und vertikalen Geraden als Bezugsgeraden dienen. Der Lösungsansatz basiert weiters auf dem Grundgedanken, dass in Abhängigkeit der Ausrichtung der Kameraachse und zu der Kamerafortbewegungsachse bei keiner optischen Verzerrung beziehungsweise nach einer optischen Entzerrung einer optischen Bildverzerrung bei einer Darstellung einer real horizontalen Geraden im Bild als eine nicht horizontale Gerade die Einstellung der Kamera hinsichtlich ihrer extrinsischen Parameter falsch sein muss.

Gleiches gilt unter Anlehnung an die gängige Lehre für real vertikale Geraden und deren Darstellung als vertikale Geraden im Bild. Eine sich real vertikal erstreckende Gerade oder Objektkante wird bei einer korrekten Einstellung der Kameraachse im Bild unabhängig von der Orientierung der Kameraachse zur der Kamerafortbewegungsrichtung als eine vertikale Bildpunkt-Gerade beziehungsweise Objektkante dargestellt, sofern diese Gerade nicht durch die Optik der Kamera, insbesondere die Linse der Kamera verzerrt wird. Wie oben erwähnt ist eine Verzerrung aufgrund der optischen Verhältnisse unter Anwendung von Verfahren nach dem Stand der Technik entzerrbar.

Dieser dem erfindungsgemäßen Verfahren zu Grunde liegende Grundgedanke ist unter den oben getroffenen Vereinfachungen einer horizontalen, sich rechtwinkelig zu der Kameraachse erstreckenden Gerade oder vertikalen, sich rechtwinkelig zu der Kameraachse erstreckenden Gerade für den Fachmann einfach zu verstehen.

Nachdem eine beliebig orientierte Gerade unter Verweis auf die vektorielle Darstellung mehrere Komponenten wie eine horizontale, sich rechtwinkelig zu der Kameraachse erstreckende Komponente oder eine vertikale, sich rechtwinkelig zu der Kameraachse erstreckende Komponente aufweisen kann, ist das erfindungsgemäße Verfahren gemäß oben gegebener allgemeiner Beschreibung auf jede sich im Raum beliebig erstreckende Gerade in der Form anwendbar, als dass die horizontale, sich rechtwinkelig zu der Kameraachse erstreckende Komponente und/oder die vertikale, sich rechtwinkelig zu der Kameraachse erstreckende Komponente im erfindungsgemäßen Verfahren betrachtet wird.

Die Ermittlung der Ausrichtung der Kamera hinsichtlich der extrinsischen Parameter kann während des Gebrauches der Kamera erfolgen, um sicherzustellen, dass die Kamera korrekt ausgerichtet ist.

Das erfindungsgemäße Verfahren kann auch umfassen, dass die Kamera unter Bringen des Kameraneigungswinkels auf einen definierten Winkel und/oder
die Kamera unter Bringen des Versatzmaßes auf ein definiertes Versatzmaß durch Stellen der Aufnahmerichtung und/oder durch ein Verzerren des aufgenommenen Bildes einstellbar ist.

Das richtige Einstellen der Kamera oder das Verzerren des Bildes macht es möglich, dass das durch die Kamera aufgenommene Bild für Anwendungen mit einer hohen Genauigkeitsanforderung verwendet wird.

Das erfindungsgemäße Verfahren kann auch den Schritt umfassen, dass mittels des durch die Kamera aufgenommen Bildes unter Anwendung von Transformationsbedingungen eine weitere Kamera ausgerichtet wird.

Dieser Verfahrensschritt kann voraussetzen, dass die Position der Kamera und die Position der weiteren Kamera bekannt sind. Aus dem mit der Kamera aufgenommenen Bild können unter Anwendung von Transformationsgleichungen die extrinsischen Sollparamater der weiteren Kamera errechnet werden und dementsprechend das Bild der weiteren Kamera verzerrt oder die Stellung der weiteren Kamera angepasst werden.

Das erfindungsgemäße Verfahren kann auch dadurch ergänzt werden, dass eine reale Position der Kamera mittels eines Positionsbestimmungsverfahrens wie beispielsweise unter Verwendung eines GPS-Systems ermittelt wird.

Das hier beschriebene Verfahren kann als computer-implementiertes Verfahren durchgeführt werden.

Die hier offenbarte Erfindung betritt auch eine Vorrichtung zur Datenverarbeitung, welche Vorrichtung Mittel zur Ausführung des hier beschriebenen Verfahrens umfasst. Die erfindungsgemäße Vorrichtung zur Datenverarbeitung kann einen Sensor zur Bildaufnahme und gegebenenfalls einen Antrieb zur Steuerung der Ausrichtung des Sensors umfassen.

Die hier beschriebene Erfindung betrifft auch ein Computerprogrammprodukt umfassend Befehle, welche Befehle bei der Ausführung des Programms durch einen Computer diesen Computer und/oder einen weiteren Computer veranlassen, das hier beschriebene Verfahren auszuführen.

Die hier offenbarte Erfindung betrifft auch ein computerlesbares Speichermedium, umfassend Befehle, welche Befehle bei der Ausführung durch einen Computer diesen Computer und/oder einen weiteren Computer veranlassen, das hier beschriebene Verfahren auszuführen.

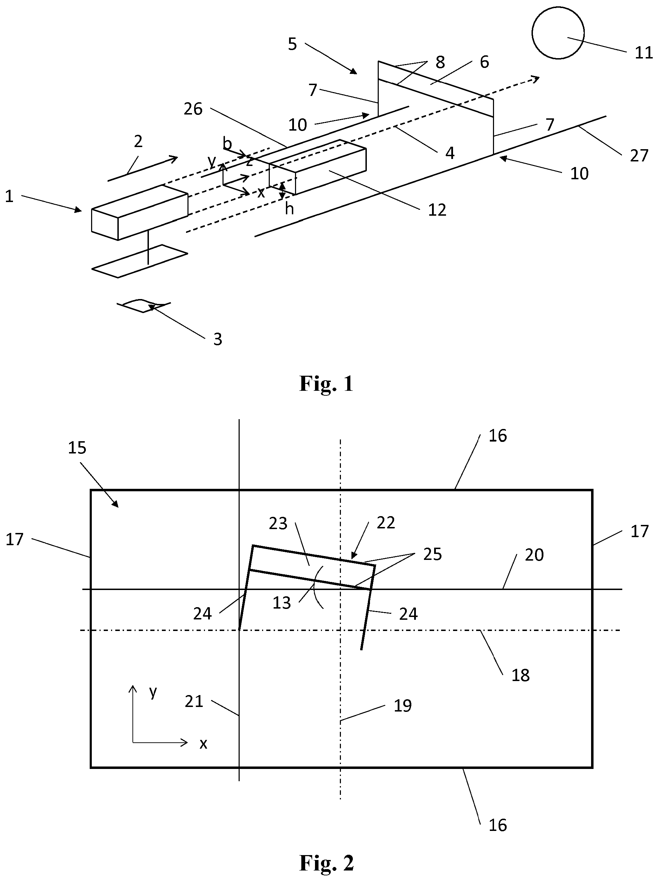

Das erfindungsgemäße Verfahren wird in einer möglichen Ausführungsform anhand der nachstehenden Figurenbeschreibungen unter Verweis auf die angeschlossenen Figuren 1 bis 5 diskutiert, wobei der Fachmann zweifelslos in der Lage ist, unter Verwendung seines Fachwissens und der hier abgegebenen Beschreibung des erfindungsgemäßen Verfahrens eine weitere Ausführungsform zu erdenken.

Weder die Figurenbeschreibung noch die Figuren beschränken den Gegenstand der Erfindung. Der Gegenstand der Erfindung wird durch die Ansprüche bestimmt.

Der Fachmann ist in der Lage die einzelnen Figurenbeschreibungen miteinander und auch einzeln mit dem oben angeführten allgemeinen Beschreibungsteil zu kombinieren.

In den Figuren kennzeichnen die folgenden Bezugszeichen die nachstehenden Elemente.
- 1, 1': Kamera
- 2: Kamerafortbewegungsrichtung
- 3: Bewegungsebene
- 4, 4': Kameraachse
- 5: Objekt
- 6: Anzeigefläche
- 7: Steher
- 8: Flächenkante der Anzeigefläche
- 9: (frei)
- 10: Fußpunkt Steher
- 11: weiteres Objekt (Kugel)
- 12: Fahrzeug
- 13: erster Winkel (Winkel zu horizontaler Bildachse oder parallele Linie)
- 14: zweiter Winkel (Winkel zu vertikaler Bildachse oder parallele Linie)
- 15: Bild
- 16: horizontale Bildgrenzen
- 17: vertikale Bildgrenzen
- 18: horizontale Bildachse
- 19: vertikale Bildachse
- 20: parallele horizontale Bildachse
- 21: parallele vertikale Bildachse
- 22: Bildpunkt-Objekt
- 23: Bildpunkt-Anzeigefläche
- 24: Bildpunkt-Steher
- 25: Bildpunkt-Flächenkante
- 26: erste Linie der Bewegungsbahn
- 27: zweite Linie der Bewegungsbahn
- 28: Bildpunkt-Bewegungsbahn
- 29: erste Bildpunkt-Linie
- 30: zweite Bildpunkt-Linie
- 31: Sollverlauf erste Bildpunkt-Linie
- 32: Sollverlauf zweite Bildpunkt-Linie
- 33: Versatzmaß
- 34: Auto
- 35: Frontpartie
- 36: Bewegungsrichtung Auto
- 37, 37': Seite des Autos
- 38: Heckpartie des Autos

Die Figur 1 veranschaulicht die dem erfindungsgemäßen Verfahren zugrunde liegende Problemstellung. Es wird eine Kamera 1 in eine Kamerafortbewegungsrichtung 2 in einer Bewegungsebene 3 bewegt. Die Kamera 1 kann zufolge einer Beschleunigung der Kamera 1 und aufgrund von Unebenheiten der Bewegungsebene 3, welche Beschleunigung und Unebenheiten auf die Kamera 1 wirkende Kräfte verursachen, oder aufgrund eines Gebrechens an einem Auto, an welchem die Kamera 1 angebracht ist, verstellt werden. Die Kamera 1 kann sohin um eine oder mehrere Achsen der Achsen x, y, z gedreht oder verschoben werden, sodass die Kameraachse 4 in eine abweichende Richtung gerichtet ist. Figur 1 zeigt eine korrekt ausgerichtete Kamera 1 mit einer korrekt ausgerichteten Kameraachse 4.

Die Erfindung stellt sich die Aufgabe der Ermittlung der extrinsischen Parameter der Kamera 1. Es soll die Orientierung der Kameraachse 4 in Bezug auf das in Figur 1 eingetragene Koordinatensystem x, y, z ermittelt werden.

Die Kamera 1 nimmt ein reales Objekt 5 auf. Die Figur 1 zeigt ein reales Verkehrsschild umfassend eine reale Anzeigefläche 6 und reale Steher 7 als reales Objekt 5. Die reale Anzeigefläche 6 umfasst sich real horizontal erstreckende Flächenkanten 8. Der reale Steher 7 erstreckt sich real vertikal. Das reale Objekt 5 wird in Bild 15 (siehe Figur 2 bis 5) als Bildpunkt-Objekt 22 wiedergegeben.

Die Kamera 1 nimmt weiters die reale Bewegungsebene 3 auf. Die reale Bewegungsebene 3 umfasst eine sich parallel zu der Kamerabewegungsrichtung 2 erstreckende erste Linie 26 und eine sich parallel zu der Kamerabewegungsrichtung 2 erstreckende zweite Linie 27. Die Figur 1 zeigt den Sonderfall, dass die realen Linien 26, 27 durch den realen Fußpunkt 10 der realen Steher 7 verlaufen.

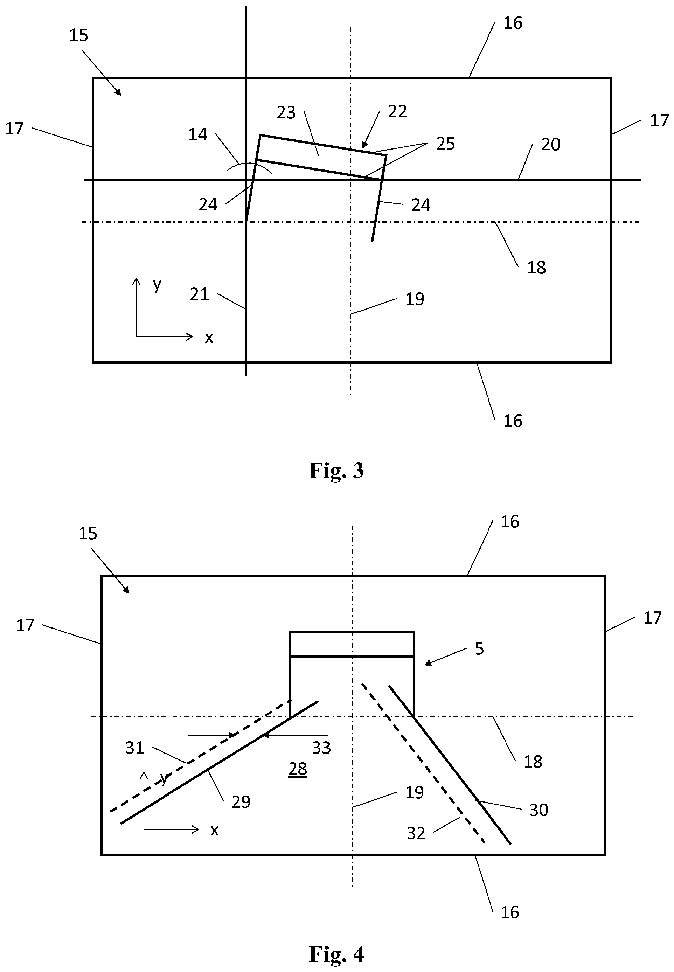

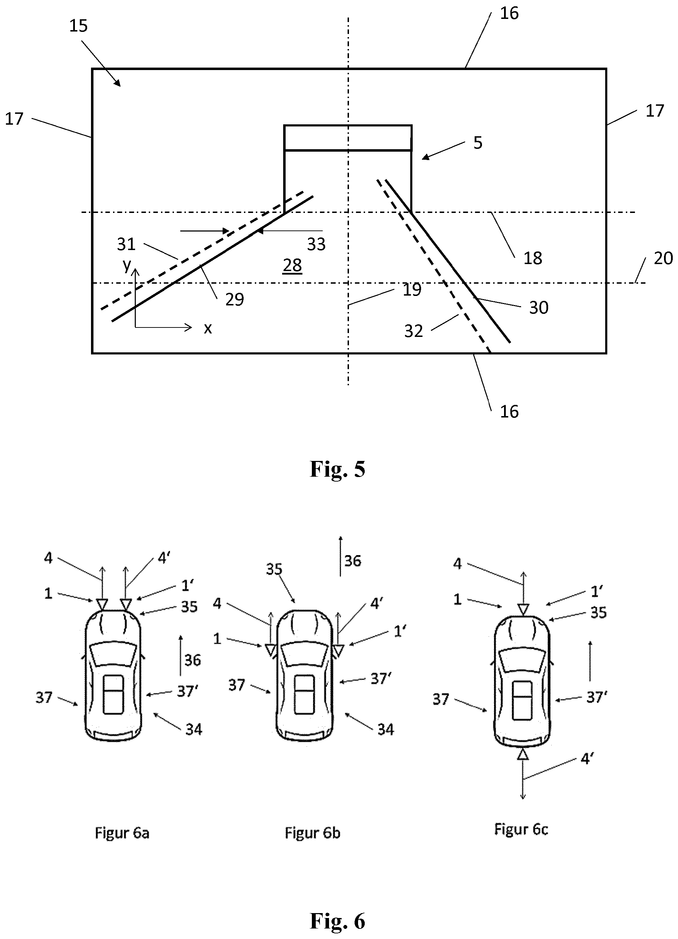

Die reale Bewegungsebene 3 wird im Bild (siehe Figur 4 und Figur 5) als Bildpunkt-Bewegungsebene 28 wiedergegeben.

Die Kamera 1 nimmt weiters eine reale Kugel 11 als ein Beispiel eines weiteren Objektes mit Objektkanten auf, welche Objektkanten nicht für die Ermittlung der extrinsischen Parameter geeignet sind.

Weiters nimmt die Kamera 1 ein - in Kamerabewegungsrichtung 2 gesehen - vor der Kamera 1 situiertes reales Fahrzeug 12 auf.

In einem ersten Schritt werden die von der Kamera 1 aufgenommenen Objekte, nämlich das Verkehrsschild als Objekt 5 umfassend die Anzeigefläche 6 und die Steher 7, das Fahrzeug 12 und die Kugel 11 nach Methoden nach dem Stand der Technik klassifiziert.

Es wird sohin das reale Objekt 5 als ein reales Verkehrsschild mit einer realen Anzeigefläche 6 und realen Stehern 7 erkannt. Die Erkennung des realen Objektes 5 als ein reales Verkehrsschild basiert unter anderem auf der Geometrie des Objektes 5, welche Geometrie im konkreten Fall im Wesentlichen durch die Anzeigefläche 6 und die Steher 7 beschreibbar ist.

Es sei bekannt, dass die obere und untere Flächenkante 8 der Anzeigefläche 6 eine reale horizontale, im rechten Winkel zu der Kamerabewegungsrichtung 2 und/oder zu der Kameraachse 4 verlaufende Erstreckungsrichtung aufweist. Diese Objekteigenschaft ist in einer Datenbank als eine reale Objekteigenschaft der Anzeigefläche 6 des Verkehrszeichens hinterlegt.

Es sei weiteres bekannt, dass die Steher 7 sich real vertikal erstrecken. Auch diese reale Objekteigenschaft des Stehers 7 ist in einer Datenbank hinterlegt.

Figur 1 zeigt das Verkehrsschild als Objekt 5 in einem normgerechten Zustand. Die obere und untere Flächenkante 8 der Anzeigefläche 6 erstreckt sich real horizontal. Die Steher 7 erstrecken sich real vertikal.

Ein von einem normgerechten Zustand abweichendes Verkehrsschild (in Figur 1 nicht dargestellt) könnte beispielsweise einen schrägen Steher 7 umfassen. Nachdem die Geometrie als Objekteigenschaften des Objektes 5 in die oben erwähnte Objektklassifizierung eingehen, würde ein über ein definiertes Maß abweichendes Objekt nicht als ein normgerechtes Verkehrsschild erkannt werden. Die Verknüpfung von realen Objekteigenschaften mit der Objektklassifizierung eines Objektes ist ein wesentlicher Schritt des erfindungsgemäßen Verfahrens zur hinreichend genauen Ermittlung der extrinsischen Parameter der Kamera 1.

Da das Objekt als ein Verkehrsschild erkannt wurde, eignen sich die geometrischen Objekteigenschaften des Verkehrsschildes zur Ermittlung der extrinsischen Parameter der Kamera 1.

Es wird weiters die Bewegungsebene 3 als eine solche erkannt. Dieser Schritt schließt auch ein, dass die Linien 26, 27 der Bewegungsebene 3 als solche erkannt werden.

Die Erkennung des Verkehrsschildes als ein Objekt und die Erkennung der Bewegungsbahn 3 als eine solche schließt auch ein, dass eine Kugel 11 und das Fahrzeug 12 als weitere Objekte mit weiteren Objektkanten erkannt werden, welche weiteren Objektkanten nicht für die Ermittlung der extrinsischen Parameter geeignet sind. Letzteres bedingt keine explizite Erkennung der weiteren Objekte; es ist die Erkennung der weiteren Objekte als von dem Objekt 5 abweichend ausreichend.

Die Figur 2 veranschaulicht die Bestimmung des ersten Winkels 13 als extrinsischer Parameter.

Die Figur 2 zeigt das durch die Kamera 1 erstellte Bild 15. Das Bild 15 umfasst horizontale Bildgrenzen 16 und vertikale Bildgrenzen 17. Das Bild 15 umfasst weiters eine horizontale Bildachse 18 und eine vertikale Bildachse 19, welche Bildachsen 18, 19 die Bildgrenzen 16, 17 im Wesentlichen in deren Mittelpunkten schneiden. Die Bildachsen 18, 19 können beispielsweise in einer Datenbank hinterlegt sein oder als parallele Linien zu den Bildgrenzen 16, 17 erstellt werden. Weites sind im Bild 15 parallele Bildachsen 20, 21 eingetragen. Die Bildgrenzen 16, 17, die Bildachsen 18, 19 sowie die zu den Bildachsen 18, 19 parallelen Achsen 20, 21 verlaufen in der Bildebene des Bildes 15.

Die Figur 2 zeigt, dass das Bildpunkt-Objekt 22 im Bild 15 enthalten ist. Als Ergebnis der Objektklassifizierung ist bekannt, dass das Bildpunkt-Objekt 22 ein Verkehrsschild ist, welches Verkehrsschild eine Anzeigefläche 6 mit sich real horizontal erstreckenden Flächenkanten 8 und real vertikalen Stehern 7 umfasst. Nachdem das Bild 15 keine realen Objekte, sondern nur Bildpunkt-Objekte 22 umfasst, sind die reale Anzeigefläche 6 und der reale Steher 7 in der Figur 2 nicht eingetragen. Es sind die Bildpunkt-Anzeigefläche 23 mit Bildpunkt-Flächenkanten 25 und die Bildpunkt-Steher 24 im Bild 15 eingetragen.

Es sind die Bildpunkt- Flächenkanten 25 und die realen Steher 7 als Objektkanten des Objektes 5 aus dem Bild 15 extrahierbar. Verfahren zum Extrahieren von Kanten von Objekten sind nach dem Stand der Technik bekannt und nicht Teil der Offenbarung dieser Erfindung.

Unter Anwendung von Verfahren nach dem Stand der Technik ist der erste Winkel 13 als der Winkel zwischen parallelen horizontalen Bildachse 20 als eine Gerade und der Bildpunkt-Flächenkante 25 als eine weitere Gerade ermittelbar. Nach dem Stand der Technik ist ein Winkel zwischen einer Geraden und einer weiteren Geraden bestimmbar. Der erste Winkel 13 ist ein Maß zur Bestimmung der nicht korrekten Einstellung der Kamera, insbesondere zur Bewertung einer Verstellung der Kamera 1 um die Kameraachse 4.

Um die Übersichtlichkeit zu wahren, sind in Figur 2 und in Figur 3 das weitere Objekt 11 und das Fahrzeug 12 nicht eingetragen, da das weitere Objekt 11 und das Fahrzeug 12 als ein Ergebnis der zuvor durchgeführten Objektklassifizierung für die Ermittlung des ersten Winkels 18 und des zweiten Winkels 19 (siehe Figur 3) nicht weiter beachtet werden. Mit anderen Worten wird im Zuge der oben erwähnten Objektklassifizierung ausschließlich das Verkehrsschild als Objekt 5 zur Ermittlung des ersten Winkels 18 und zur Ermittlung des zweiten Winkels 19 als geeignet klassifiziert. Dies schließt ein, dass das weitere Objekt 11 und das Fahrzeug 13 zur Ermittlung des ersten Winkels 18 und des zweiten Winkels 19 als nicht geeignet klassifiziert werden.

Das erfindungsgemäße Verfahren zeichnet sich sohin dadurch aus, dass im Bild 15 enthaltende Objekte hinsichtlich ihrer Eignung zur Bestimmung der extrinsischen Parameter klassifiziert werden. Eine Eignung eines Objektes zur Bestimmung der extrinsischen Parameter bedingt, dass das Objekt bekannte geometrische Eigenschaften aufweist, welche geometrischen Eigenschaften in einer Datenbank als zur Bestimmung der extrinsischen Parameter geeignet hinterlegt sind.

Der Fachmann erkennt, dass die in Figur 2 gezeigten Bildpunkt-Flächenkanten 25 entgegen der hinterlegten realen Objekteigenschaften nicht parallel zu der horizontalen Bildachse 18 verlaufen. Es ist mittels Verfahren nach dem Stand der Technik der erste Winkel 13 zwischen der Flächenkante 25 und der parallelen horizontalen Bildachse 20 bestimmbar. Aus Figur 1 erkennt der Fachmann, dass die Bildachse 18 um das Maß des ersten Winkels 18 um die z-Achse verdreht ist. Zur besseren Nachvollziehbarkeit dieses Gedankenschrittes ist in Figur 2 auch das in Figur 1 eingetragene Koordinatensystem x, y, z eingetragen.

Die Figur 3 veranschaulicht die Bestimmung des zweiten Winkels 14 als extrinsischer Parameter.

Die Figur 3 umfasst ein Bild 15 mit dem gleichen Inhalt wie in Figur 2. Im Bild 15 ist wiederum nur das Verkehrsschild als Objekt 5 eingetragen, da dieses Objekt 5 - wie oben eingehend erläutert - über eine Objektklassifizierung zur Bestimmung der extrinsischen Parameter erkannt wurde. Das weitere Objekt 11 und das Fahrzeug 12 sind in Figur 2 wiederum nicht eingetragen, da diese Objekte als zur Ermittlung der extrinsischen Parameter nicht geeignet klassifiziert wurden.

Mittels Verfahren nach dem Stand der Technik ist der zweite Winkel 14 zwischen der parallelen vertikalen Bildachse 21 und dem Bildpunkt-Steher 24 bestimmbar. Der zweite Winkel 13 entspricht dem Winkel, um welchen Winkel die Kamera um die z-Achse (siehe Figur 1) verdreht ist.

Der Fachmann kann die zu Figur 2 und Figur 3 beschriebenen Verfahren getrennt voneinander ausführen oder miteinander kombinieren. Der Fachmann kann auch das Verfahren gemäß Figur 3 anwenden, um die Genauigkeit des Verfahrens gemäß Figur 2 zu kontrollieren.

Anhand der Figur 4 und der Figur 5 wird über die Ermittlung einer Verdrehung der Kamera um die x-Achse und/oder einer Verdrehung der Kamera um die y-Achse und/oder einer Verschiebung der Kamera in x-Richtung und/oder einer Verschiebung der Kamera in y-Richtung diskutiert.

Die Figur 4 und die Figur 5 zeigen wiederum das mittels Objekterkennung klassifizierte Verkehrsschild als Objekt 5. Das weitere Objekt 11 und das Fahrzeug sind aus den oben genannten Gründen in Figur 4 nicht eingetragen. Ergänzend hierzu ist die Bildpunkt-Bewegungsebene 28 mit einer ersten Bildpunkt-Linie 29 und einer zweiten Linie 30 eingetragen. Die Objektklassifizierung nach dem Stand der Technik erkennt die Linien 26, 27 beziehungsweise Bildpunkt-Linien 29, 30 als Linien der Bewegungsebene 28. Die Linien 26, 27 beziehungsweise Bildpunkt-Linien 29, 30 können beispielsweise Begrenzungslinien einer in der Bewegungsebene verlaufenden Fahrbahn sein.

Unter Anwendung von Verfahren nach dem Stand der Technik ist der Verlauf der Bildpunkt-Linien 29, 30 im Bild 15 feststellbar und mit einem Soll-Verlauf der Bildpunkt-Linien 31, 32 vergleichbar. Die Bildpunkt-Linien 31, 32 können beispielsweise in einer Datenbank als ein Zustand einer korrekt eingestellten Kamera hinterlegt sein. Figur 4 zeigt den Sonderfall, dass die Bildpunkt-Linien 29, 30 um ein Versatzmaß 33 versetzt verlaufen. Figur 4 veranschaulicht den Sonderfall einer parallelen Verschiebung der Linien 31 zu 29 sowie 30 zu 32.

Die Figur 5 veranschaulicht den Sonderfall einer Verdrehung der Linien 31 zu 29 sowie 30 zu 32.

Der oben beschriebene Vergleich der Ist-Position der Bildpunkt-Linien 29, 30 und der SollPosition der Bildpunkt-Linien 31, 32 kann auch durch Betrachtung der Schnittpunkte der Linien 29, 30, 31, 32 mit einer Achse wie beispielswiese der parallelen horizontalen Bildachse 20 erfolgen.

Das erfindungsgemäße Verfahren erlaubt die Ermittlung der extrinsischen Parameter einer in eine Kamerafortbewegungsrichtung 2 bewegten Kamera 1. Das erfindungsgemäße Verfahren sieht weiters vor, dass eine Abweichung der extrinsischen Parameter von extrinsischen Soll-Parametern errechnet wird.

Gegebenenfalls kann die Kamera 1 ausgerichtet werden, so keine Abweichung der extrinsischen Parameter von den extrinsischen Soll-Parametern messbar ist.

Gegebenenfalls kann das von der Kamera 1 aufgenommene Bild 15 unter Anwendung von Transformationsgleichungen und unter Berücksichtigung der ermittelten extrinsischen Parameter verzerrt werden.

Das erfindungsgemäße Verfahren zeichnet sich sohin dadurch aus, dass die Ausrichtung der Kamera 1, insbesondere die Orientierung der Kameraachse 4 im realen Raum hinreichend genau bekannt ist. Die Ausrichtung der Kameraachse 4 ist insbesondere für das Durchführen von Messungen mittels des Bildes 15 bekannt.

Es ist in Figur 1 ein Höhenversatz h und ein Breitenversatz b zwischen der Kamera 1 und dem Fahrzeug 11 eingetragen. Mittels einer eingerichteten Kamera 1 ist die Bewegung des Fahrzeuges 12 relativ zu der Kamera 1 hinreichend genau bestimmbar.

Die bisher angeführte Diskussion des erfindungsgemäßen Verfahrens betrifft die Ausrichtung einer Kamera, welche Kamera 1 auf einem Fahrzeug angebracht ist.

Wie bereits im allgemeinen Beschreibungsteil angeführt ist, ist auch das Ausrichten einer Kamera in Bezug zu einer weiteren Kamera möglich. Figur 6 zeigt mögliche Formen einer Anordnung einer Kamera 1 und einer weiteren Kamera 1' an einem Auto 34, wobei die Kamera 1 und die weitere Kamera 1' symbolhaft mittels Dreiecke dargestellt ist.

Figur 6a veranschaulicht die mögliche Anordnung der Kamera 1 und der weiteren Kamera 1' an der Frontpartie 35 des Autos 34. Die Kamera 1 und die weitere Kamera 1' weisen eine Kameraachse 4 beziehungsweise eine weitere Kameraachse 4' auf, welche Kameraachse 4 und welche weitere Kameraachse 4' in einem jeweils korrekt eingestellten Zustand parallel zueinander orientiert sind. Die Figur 6a zeigt den Sonderfall, dass die Kameraachsen 4 und 4' parallel zu der Bewegungsrichtung 26 des Autos 34 und in die gleiche Richtung wie die Bewegungsrichtung 36 des Autos 34 orientiert sind.

Figur 6b veranschaulicht die mögliche Anordnung der Kamera 1 und der weiteren Kamera 1' an jeweils einer der Seiten 37, 37' des Autos 34. Die Kamera 1 und die weitere Kamera 1' weisen wiederum eine Kameraachse 4 beziehungsweise eine weitere Kameraachse 4' auf, welche Kameraachse 4 und welche weitere Kameraachse 4' in einem jeweils korrekt eingestellten Zustand parallel zueinander orientiert sind. Die Figur 6a zeigt den Sonderfall, dass die Kameraachsen 4 und 4' parallel zu der Bewegungsrichtung 36 des Autos 34 und in die gleiche Richtung wie die Bewegungsrichtung 36 des Autos 34 orientiert sind.

Figur 6c zeigt eine weitere mögliche Anordnung der Kamera 1 und der weiteren Kamera 1' an der Frontpartie 35 beziehungsweise an der Heckpartie 38 des Autos 34. Die Figur 6a zeigt den Sonderfall, dass die Kameraachse 4 parallel zu der Bewegungsrichtung 36 des Autos 34 und in die gleiche Richtung wie die Bewegungsrichtung 36 des Autos 34 orientiert ist. Die Figur 6a zeigt weiters den Sonderfall, dass die Kameraachse4' parallel zu der Bewegungsrichtung 36 des Autos 34 und in die entgegengesetzte Richtung wie die Bewegungsrichtung 36 des Autos 34 orientiert ist.

Die Figuren 2, 3, 4 und 5 zeigen Bilder einer nicht korrekt eingestellten Kamera, wobei zur Diskussion des Ausrichtens einer Kamera zu einer weiteren Kamera angenommen wird, dass ein Bild ähnlich zu den Figuren 2, 3, 4 oder 5 durch die Kamera 1 geliefert wird. Die Kamera 1 ist somit die unrichtig eingestellte Kamera, während die weitere Kamera 1' richtig eingestellt ist.

Das erste sich hier stellende Problem ist, die richtig eingestellte Kamera aus der Kamera 1 und der Kamera 1' auszuwählen. Es kann unter Anwendung des oben beschriebenen Verfahrens jene Kamera als eine richtig erkannte Kamera ermittelt werden, welche Kamera ein Bild mit einem ersten Winkel 13 gleich Null und/oder einen zweiten Winkel 14 gleich Null liefert.

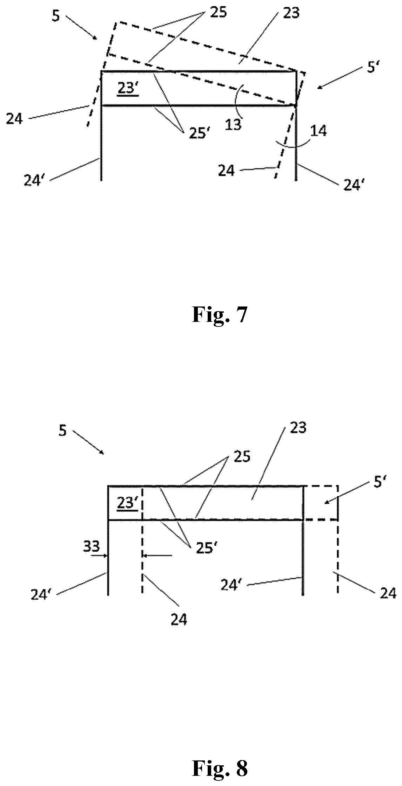

Bei den in Figur 6a und Figur 6b gezeigten Anordnungen der Kamera 1 und der weiteren Kamera 1' ist der Abstand zwischen den Kameraachsen 4, 4' im korrekt eingestellten Zustand ermittelbar. Ein Einstellen der Kamera' in Bezug auf die weitere Kamera 1' ist derart durchführbar, dass die durch die Kameras 1, 1' ermittelten Bilder übereinandergelegt werden, wie dies in Figur 7 dargestellt ist.

Die Figur 7 ist auf die Darstellung des Verkehrsschildes als Objekt umfassend eine Anzeigefläche und die Steher beschränkt, da die Einstellung der Kamera 1 in Bezug auf die weitere Kamera 1' ausschließlich durch diese Bildinhalte durchführbar ist.

Die Kamera 1 liefert ein Bild umfassend ein Verkehrsschild als Objekt 5 mit einer Anzeigefläche 6 und Steher 7. Die Anzeigefläche 6 umfasst Flächenkanten 8 der Anzeigefläche. Das Objekt 5 ist in Figur 7 mittels strichlierter Linien dargestellt.

Die weitere Kamera 1' liefert ein Bild umfassend ein Verkehrsschild als Objekt 5' mit einer Anzeigefläche 6' und Steher 7'. Die Anzeigefläche 6' umfasst Flächenkanten 8' der Anzeigefläche. Das Objekt 5' ist in Figur 7 mittels durchgezogener Linien dargestellt.

Unter Anwendung von Verfahren nach dem Stand der Technik werden das Bild der Kamera 1 und das Bild der Kamera 1' übereinandergelegt, wie dies in Figur 7 dargestellt ist. Anhang der Objektkanten 8 und der Objektkanten 8' ist ein erster Winkel 13 als ein Maß einer Verstellung der Kamera 1' um die Kameraachse 4 ermittelbar. Mittels des Stehers 7 und des Stehers 7' ist ein weiteres Maß einer Verstellung der Kamera 1' um die Kameraachse 4 ermittelbar.

Im Unterschied zu den anhand der Figuren 2 und 3 diskutierten Verfahren kommt das in Figur 7 diskutierte Verfahren ohne die Bestimmung der horizontalen oder vertikalen Bildgrenzen aus. Während die Figur 7 das Bestimmen des ersten Winkels 13 und des zweiten Winkels 14 betrifft, veranschaulicht die Figur 8 das Bestimmen eines Versatzmaßes 33 durch ein Übereinanderlegen der Bilder.

## Patentansprüche

1. Computerimplementiertes Verfahren zur Ermittlung der Ausrichtung einer Kamera hinsichtlich der extrinsischen Parameter der Kamera,
welche Kamera in eine Kamerafortbewegungsrichtung gegebenenfalls parallel oder in einem bekannten Winkel zu einer Bewegungsebene bewegt wird,
wobei das mittels der Kamera aufgenommene Bild eine horizontale Bildachse sowie Bildpunkte umfasst,
aus welchem Bild Bildpunkt-Objekteigenschaften eines aufgenommenen Bildpunkt-Objektes extrahiert werden, wobei
ein Bildpunkt-Objekt nach den Bildpunkt-Objekteigenschaften und unter Vergleich mit realen Objekteigenschaften klassifiziert wird,
welche realen Objekteigenschaften in einer Datenbank abgespeichert sind,
wobei aus dem Bild eine Bildpunkt-Objektkante eines aufgenommenen Bildpunkt-Objektes extrahiert wird, wobei
aus der Vielzahl der Bildpunkt-Objektkanten eine Bildpunkt-Objektkante des Bildpunkt-Objektes ausgewählt wird,
welche Objektkante die reale Objekteigenschaft einer sich horizontal erstreckenden Kante aufweist,
welche reale Objekteigenschaft dieser Objektkante in einer Datenbank abgespeichert ist, wobei ein Abweichungsmaß eines Kameraneigungswinkel durch die Bestimmung eines ersten Winkels, welcher erste Winkel sich zwischen der Bildpunkt-Objektkante und der horizontalen Bildachse erstreckt, bestimmt wird.

2. Computerimplementiertes Verfahren zur Ermittlung der Ausrichtung einer Kamera hinsichtlich der extrinsischen Parameter der Kamera,
welche Kamera in eine Kamerafortbewegungsrichtung gegebenenfalls parallel oder in einem bekannten Winkel zu einer Bewegungsebene bewegt wird,
wobei das mittels der Kamera aufgenommene Bild eine vertikale Bildachse sowie Bildpunkte umfasst,
aus welchem Bild Bildpunkt-Objekteigenschaften eines aufgenommenen Bildpunkt-Objektes extrahiert werden, wobei
ein Bildpunkt-Objekt nach den Bildpunkt-Objekteigenschaften und unter Vergleich mit realen Objekteigenschaften klassifiziert wird,
welche realen Objekteigenschaften in einer Datenbank abgespeichert sind,
wobei aus dem Bild eine Bildpunkt-Objektkante eines aufgenommenen Bildpunkt-Objektes extrahiert wird, wobei
aus der Vielzahl der Bildpunkt-Objektkanten eine Bildpunkt-Objektkante des Bildpunkt-Objektes ausgewählt wird,
welche Objektkante die reale Objekteigenschaft einer sich vertikal erstreckenden Kante aufweist,
welche reale Objekteigenschaft dieser Objektkante in einer Datenbank abgespeichert ist, wobei ein Abweichungsmaß eines Kameraneigungswinkel durch die Bestimmung eines zweiten Winkels zwischen der Bildpunkt-Objektkante und der vertikalen Bildachse bestimmt wird.

3. Verfahren nach einem der Ansprüche 1 bis 2, **dadurch gekennzeichnet, dass** die reale Objekteigenschaft die Erstreckung der realen Objektkante parallel zu einer Bezugsebene umfasst.

4. Verfahren nach einem der Ansprüche 1 bis 3, **dadurch gekennzeichnet, dass** die Kamera unter Bringen des Kameraneigungswinkels auf einen definierten Winkel einstellbar ist.

5. Verfahren nach einem der Ansprüche 1 bis 4, **dadurch gekennzeichnet, dass** mittels des durch die Kamera aufgenommen Bildes unter Anwendung von Transformationsbedingungen eine weitere Kamera ausgerichtet wird.

6. Verfahren nach einem der Ansprüche 1 bis 5, **dadurch gekennzeichnet, dass** eine reale Position der Kamera relativ zu einem Bezugspunkt mittels eines Positionsbestimmungsverfahrens ermittelt wird.

7. Vorrichtung zur Datenverarbeitung, umfassend Mittel zur Ausführung des Verfahrens nach einem der Ansprüche 1 bis 6.

8. Vorrichtung nach Anspruch 7 umfassend einen Bildsensor und gegebenenfalls einen Antrieb zur Ausrichtung des Bildsensors.

9. Computerprogramm, umfassend Befehle, die bei der Ausführung des Programms durch einen Computer diesen Computer und/oder einen weiteren Computer veranlassen, das Verfahren nach einem der Ansprüche 1 bis 6 auszuführen.

10. Computerlesbares Speichermedium, umfassend Befehle, die bei der Ausführung durch einen Computer diesen Computer und/oder einen weiteren Computer veranlassen, das Verfahren nach einem der Ansprüche 1 bis 6 auszuführen.

## Claims

1. A computer-implemented method for determining the orientation of a camera with regard to the extrinsic parameters of the camera,
wherein the camera is moved in a camera movement direction, optionally parallel to or at a known angle relative to a plane of movement,
wherein the image captured by the camera comprises a horizontal image axis as well as image-point objects,
from which image image-point object properties of a captured image-point object are extracted, wherein
an image-point object is classified based on the image-point object properties and by comparison with real object properties,
which real object properties are stored in a database,
wherein
an image-point object edge of a captured image-point object is extracted from the image, wherein
from the plurality of image-point object edges, an image-point object edge of the image-point object is selected,
which object edge exhibits the real object property of a horizontally extending edge, which real object property of this object edge is stored in a database,wherein a deviation measure of a camera tilt angle is determined by determining a first angle, which first angle extends between the image-point object edge and the horizontal image axis.

2. Computer-implemented method for determining the orientation of a camera with respect to the extrinsic parameters of the camera,
which camera is moved in a direction of camera movement, optionally parallel to or at a known angle relative to a plane of movement,
wherein the image captured by the camera comprises a vertical image axis as well as image-point objects,
from which image image-point object properties of a captured image-point object are extracted, wherein
an image-point object is classified based on the image-point object properties and by comparison with real object properties,
which real object properties are stored in a database,
wherein
an image-point object edge of a captured image-point object is extracted from the image, wherein
an image-point object edge of the image-point object is selected from the plurality of image-point object edges,
which object edge exhibits the real object property of a vertically extending edge, which real object property of this object edge is stored in a database,
wherein a deviation measure of a camera tilt angle is determined by determining a second angle between the image-point object edge and the vertical image axis.

3. Method according to any one of claims 1 to 2, **characterized in that** the real object property comprises the extent of the real object edge parallel to a reference plane.

4. Method according to any one of claims 1 to 3, **characterized in that** the camera is adjustable by setting the camera tilt angle to a defined angle.

5. Method according to any one of claims 1 to 4, **characterized in that** a further camera is aligned using the image captured by the camera and applying transformation conditions.

6. Method according to any one of claims 1 to 5, **characterized in that** a real position of the camera relative to a reference point is determined by means of a position determination method.

7. Device for data processing, comprising means for carrying out the method according to one of claims 1 to 6.

8. Device according to claim 7 comprising an image sensor and optionally a drive for aligning the image sensor.

9. Computer program, comprising commands which, when the program is executed by a computer, cause this computer and / or another computer to carry out the method according to one of claims 1 to 6.

10. Computer-readable storage medium comprising instructions which, when executed by a computer, cause this computer and / or another computer to carry out the method according to one of claims 1 to 6.

## Revendications

1. Procédé informatique de détermination de l'orientation d'une caméra par rapport à ses paramètres extrinsèques,
la caméra étant déplacée selon une direction donnée, éventuellement parallèlement ou selon un angle connu par rapport à un plan de mouvement,
l'image capturée par la caméra comprend un axe horizontal et des points image,
à partir de cette image, les propriétés d'un point image capturé sont extraites,
un point image est classé selon ses propriétés et par comparaison avec les propriétés de l'objet réel,
ces propriétés réelles sont stockées dans une base de données,
le contour d'un point image capturé est extrait de l'image,
parmi les contours possibles,
ce contour présente la propriété réelle d'un bord horizontal,
et cette propriété réelle est stockée dans une base de données,
une mesure de déviation de l'angle d'inclinaison de la caméra est déterminée en calculant un premier angle, lequel est déterminé par la distance entre le contour du pixel et l'axe horizontal de l'image.

2. Procédé informatique de détermination de l'orientation d'une caméra par rapport à ses paramètres extrinsèques,
la caméra étant déplacée selon une direction donnée, éventuellement parallèlement ou selon un angle connu par rapport à un plan de mouvement,
l'image capturée par la caméra comprend un axe vertical et des points image,
à partir de cette image, une propriété d'objet d'un point image capturé est extraite,
ce point image est classé selon ses propriétés et par comparaison avec les propriétés de l'objet réel,
ces propriétés réelles sont stockées dans une base de données,
le contour d'un point image capturé est extrait de l'image,
parmi les contours de plusieurs points image,
ce contour présente la propriété réelle d'un contour vertical,
cette propriété réelle est stockée dans une base de données,
une mesure de déviation de l'angle d'inclinaison de la caméra est déterminée en calculant un second angle entre le contour du point image et l'axe vertical de l'image.

3. Procédé selon l'une quelconque des revendications 1 à 2, **caractérisé en ce que** la propriété de l'objet réel comprend le prolongement de son bord parallèle à un plan de référence.

4. Procédé selon l'une quelconque des revendications 1 à 3, **caractérisé en ce que** la caméra peut être ajustée à un angle défini en amenant son angle d'inclinaison à une valeur définie.

5. Procédé selon l'une quelconque des revendications 1 à 4, **caractérisé en ce que** une autre caméra est alignée à l'aide de l'image capturée par la caméra dans des conditions de transformation.

6. Procédé selon l'une quelconque des revendications 1 à 5, **caractérisé en ce que** la position réelle de la caméra par rapport à un point de référence est déterminée au moyen d'une méthode de détermination de position.

7. Dispositif de traitement de données comprenant des moyens de mise en œuvre du procédé selon l'une quelconque des revendications 1 à 6.

8. Dispositif selon la revendication 7, comprenant un capteur d'image et, en option, un système d'entraînement pour l'alignement de ce capteur.

9. Programme informatique comprenant des instructions qui, lorsqu'elles sont exécutées par un ordinateur, amènent cet ordinateur et/ou un autre à exécuter le procédé selon l'une quelconque des revendications 1 à 6.

10. Support de stockage lisible par ordinateur comprenant des instructions qui, lorsqu'elles sont exécutées par un ordinateur, amènent cet ordinateur et/ou un autre à exécuter le procédé selon l'une quelconque des revendications 1 à 6.
